# EUROPEAN PATENT APPLICATION

(11) **EP 4 071 459 A1**
(43) Date of publication of application: **12.10.2022**
(21) Application number: 20895747.2
(22) Date of filing: 25.11.2020
(51) Int. Cl.: G01N 19/02, G01L 5/00, G01L 5/16, B60C 19/00, B60C 23/04

(54) **MAXIMUM FRICTION COEFFICIENT ESTIMATION SYSTEM AND MAXIMUM FRICTION COEFFICIENT ESTIMATION METHOD**

(30) Priority: 02.12.2019 JP 2019218316
(71) Applicant: Toyo Tire Corporation, Itami-shi, Hyogo 664-0847 (JP)
(72) Inventor: ISHIGAMI Naohiro, Itami-shi Hyogo 664-0847 (JP)
(74) Representative: Müller-Boré & Partner Patentanwälte PartG mbB
(86) International application number: PCT/JP2020/043807
(87) International publication number: WO 2021/111942

(57) **Abstract**

A maximum friction coefficient estimation system 100 includes a storage unit 32 and a maximum friction coefficient calculation unit 33c. The storage unit 32 stores a table or a function for calculating a maximum friction coefficient between a tire 10 and a road surface for a representative tire, based on a speed of rolling motion, load, temperature of the tire 10 and a road surface condition level. The maximum friction coefficient calculation unit 33c corrects the table or the function according to an individual tire specification and calculates the maximum friction coefficient.

## Description

### [TECHNICAL FIELD]

The present invention relates to a maximum friction coefficient estimation system and a maximum friction coefficient estimation method.

### [BACKGROUND ART]

A study is being undertaken to estimate the value of friction on a road surface, the braking distance of a vehicle, etc. and automatically control the acceleration operation, braking operation, steering, etc. on behalf of a driver to assist the driver driving the vehicle.

Patent literature 1 discloses a method of determining a limit running speed according to the related art. The related-art method estimates a potential grip between the tire and the road surface as a function of an influence parameter and determines the limit running speed such that the grip requirement on an imminent route event does not exceed the potential grip.

[Patent Literature 1] JP2018-517978

### [SUMMARY OF INVENTION]

### [TECHNICAL PROBLEM]

In the method of determining a limit running speed disclosed in patent literature 1, the tire force required by the grip requirement is determined from the acceleration produced in the vehicle based on a model for analyzing a vehicle. There has been a problem in that the number of analysis models created for the respective tires would become enormous because the maximum friction coefficient between the tire and the road surface varies depending on the specification of individual tires. We have realized that the maximum friction coefficient can be estimated efficiently by defining a representative tire according to the tire type, etc. and making a correction depending on the individual tire specification.

The present invention addresses the aforementioned issue and a purpose thereof is to provide a maximum friction coefficient estimation system and a maximum friction coefficient estimation method capable of estimating the maximum friction coefficient between the tire and the road surface efficiently.

### [SOLUTION TO PROBLEM]

An embodiment of the present invention relates to a maximum friction coefficient estimation system. A maximum friction coefficient estimation system includes: a storage unit that stores a table or a function for calculating a maximum friction coefficient between a tire and a road surface for a representative tire, based on a speed of rolling motion, load, temperature of the tire and a road surface condition level; and a maximum friction coefficient calculation unit that corrects the table or the function according to an individual tire specification and calculates the maximum friction coefficient accordingly.

Another embodiment of the present invention relates to a maximum friction coefficient estimation method. A maximum friction coefficient estimation method includes: reading a table or a function for calculating a maximum friction coefficient between a tire and a road surface for a representative tire, based on a speed of rolling motion, load, temperature of the tire and a road surface condition level; and correcting the table or the function according to an individual tire specification and calculating the maximum friction coefficient accordingly.

### [ADVANTAGEOUS EFFECTS OF INVENTION]

According to the present invention, the maximum friction coefficient between the tire and the road surface can be estimated efficiently.

### [BRIEF DESCRIPTION OF DRAWINGS]

Fig. 1 is a block diagram showing a functional configuration of a maximum friction coefficient estimation system according to the embodiment;
Fig. 2 is a schematic diagram for illustrating learning in the arithmetic model;
Fig. 3 is a schematic diagram for illustrating the calculation of the maximum friction coefficient by the maximum friction coefficient calculation unit;
Figs. 4A, 4B and 4C are graphs showing an example of dependence of the friction coefficient on road surface condition, load, and speed;
Figs. 5A, 5B and 5C are graphs showing an example of dependence of the maximum friction coefficient on load, speed, and temperature; and
Fig. 6 is a flowchart showing a sequence of steps of the maximum friction coefficient calculation process performed by the friction coefficient estimation apparatus.

### [DESCRIPTION OF EMBODIMENTS]

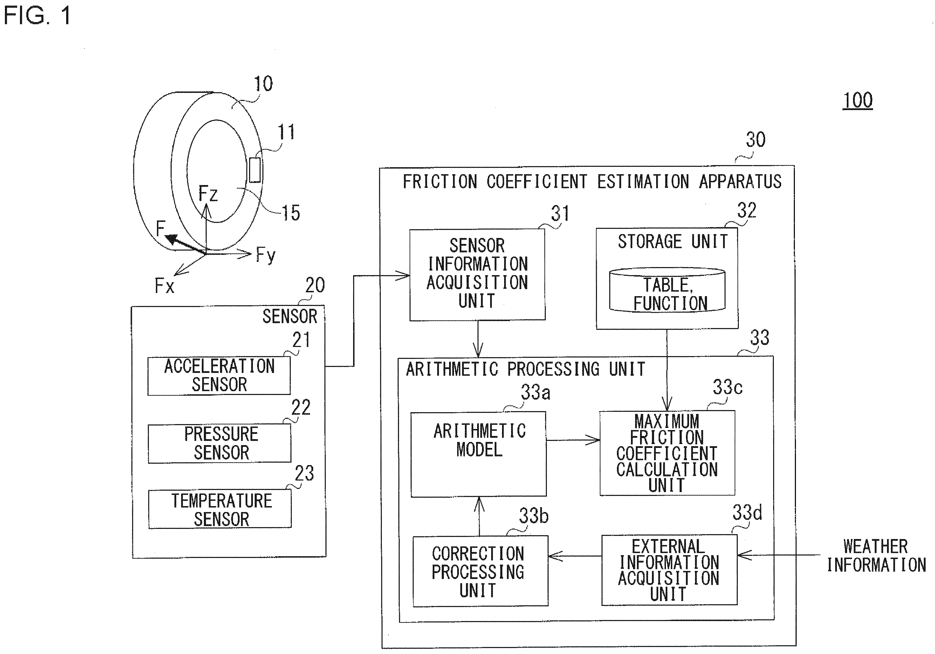

Hereinafter, the invention will be described based on a preferred embodiment with reference to Figs. 1 through 6. Identical or like constituting elements and members shown in the drawings are represented by identical symbols and a duplicate description will be omitted as appropriate. The dimension of members in the drawings shall be enlarged or reduced as appropriate to facilitate understanding. Those of the members that are not important in describing the embodiment are omitted from the drawings.

### (Embodiment)

Fig. 1 is a block diagram showing a functional configuration of a maximum friction coefficient estimation system 100 according to the embodiment. The maximum friction coefficient estimation system 100 calculates a tire force F and a road surface condition level by measuring, using a sensor 20 provided in a tire 10, a tire physical quantity produced in the tire 10 such as acceleration, inflation pressure, and temperature while a vehicle is being driven and inputting the physical quantity of the tire 10 to an arithmetic model 33a.

The maximum friction coefficient estimation system 100 stores a table or a function for calculating the maximum friction coefficient for a representative tire of the tire type to which the tire 10 belongs and calculates the maximum friction coefficient by correcting the table or the function according to the specification of the tire 10. The speed of rolling motion of the tire 10, the load defined as the vertical component Fz of the tire force F, the temperature, and the road surface condition level are input to the table or the function, the maximum friction coefficient is calculated accordingly.

The load defined as the vertical component Fz of the tire force F and the road surface condition level are determined by the arithmetic model 33a. Further, the temperature of the tire 10 is measured by the sensor 20. The speed of rolling motion of the tire 10 is calculated based on the traveling speed of the vehicle. The road surface condition level may be calculated by weighting the operation in the arithmetic model 33a based on weather information.

The maximum friction coefficient estimation system 100 corrects the table or the function for calculating the maximum friction coefficient based on the tire tread composition characteristics of the tire 10 and the parameters obtained from a static contact area image of the tire. The tire tread composition includes loss tangent tan δ, complex modulus, hardness, etc. The parameters obtained from a contact surface image showing contact between the tire 10 and the road surface include actual contact surface area, length of contact, distribution of contact pressure, etc.

The maximum friction coefficient estimation system 100 is provided with the sensor 20 and a friction coefficient estimation apparatus 30. The sensor 20 includes an acceleration sensor 21, a pressure sensor 22, a temperature sensor 23, etc. and measures the physical quantity in the tire 10 such as acceleration, tire inflation pressure, and tire temperature. The sensor 20 may include a strain gauge for measuring the strain produced in the tire 10. These sensors measure, as the physical quantity of the tire 10, the physical quantity related to the deformation and motion of the tire 10.

The acceleration sensor 21 is provided in the tire main body of the tire 10 made of a rubber material, etc. or in a wheel 15 that constitutes a part of the tire 10. The acceleration sensor 21 moves mechanically along with the tire 10 and measures the acceleration produced in the tire 10. The acceleration sensor 21 measures the acceleration in three axes including the circumferential direction, axial direction, and radial direction of the tire 10. The pressure sensor 22 and the temperature sensor 23 are provided by being mounted on the air valve of the tire 10 or by being secured to the wheel 15 to measure the inflation pressure and temperature of the tire 10, respectively. Alternatively, the pressure sensor 22 and the temperature sensor 23 may be provided in the inner liner of the tire 10, etc.

The sensor 20 measures the physical quantity of the tire 10 such as acceleration and strain, tire inflation pressure, and tire temperature and outputs the measured data to the friction coefficient estimation apparatus 30. The friction coefficient estimation apparatus 30 calculates the tire force F and the road surface condition level based on the data measured by the sensor 20 and estimates the maximum friction coefficient.

An RFID 11 or the like to which unique identification information is assigned may be attached to the tire 10 for identification of the tire. For example, the arithmetic model 33a may be selected from a data group prepared in advance in accordance with the unique information of the RFID 11 attached to the tire 10 and be configured accordingly, or the arithmetic model 33a may be selected from a database provided in a server apparatus, etc. The specification of the tire 10 may be recorded in the unique information of the RFID 11, and, further, the arithmetic model 33a suited to the specification of the tire 10 may be provided in the database. The specification of the tire 10 may be retrieved from the unique information of the RFID 11 to configure the arithmetic model 33a, or the arithmetic model 33a suited to the specification of the tire 10 thus retrieved may be selected from the database. Further, the specification of the tire 10 is used to correct the table or the function stored in the storage unit 32 described later for calculation of the maximum friction coefficient.

The friction coefficient estimation apparatus 30 includes a sensor information acquisition unit 31, a storage unit 32, and an arithmetic processing unit 33. The friction coefficient estimation apparatus 30 is an information processing apparatus such as a personal computer (PC). The parts in the friction coefficient estimation apparatus 30 can be implemented in hardware such as electronic devices or mechanical components exemplified by a CPU of a computer, and in software such as a computer program. The figure depicts functional blocks implemented by the cooperation of these elements. Therefore, it will be understood by those skilled in the art that the functional blocks may be implemented in a variety of manners by a combination of hardware and software.

The sensor information acquisition unit 31 acquires the tire physical quantity such as the acceleration, tire inflation pressure, tire temperature measured by the sensor 20 through wireless communication etc. The storage unit 32 stores a table or a function for calculating the maximum friction coefficient for a representative tire of the tire type to which the tire 10 belongs. The speed of rolling motion of the tire 10, the load defined as the vertical component Fz of the tire force F, the temperature, and the road surface condition level are input to the table or the function stored in the storage unit 32, and the maximum friction coefficient is calculated accordingly.

The arithmetic processing unit 33 includes the arithmetic model 33a, a correction processing unit 33b, a maximum friction coefficient calculation unit 33c, and an external information acquisition unit 33d. The arithmetic processing unit 33 inputs the tire physical quantity input from the sensor information acquisition unit 31 to the arithmetic model 33a to calculate the tire force F and the road surface condition level and calculates, using the maximum friction coefficient calculation unit 33c, the maximum friction coefficient between the tire 10 and the road surface. The external information acquisition unit 33d acquires, for example, weather information from an external apparatus.

As shown in Fig. 1, the tire force F has components in the three axial directions, i.e., a longitudinal force Fx in the longitudinal direction of the tire 10, a lateral force Fy in the lateral direction, and a load Fz in the vertical direction. The arithmetic model 33a calculates at least the load Fz in the vertical direction and may calculate one or both of the other two axial components. Further, the road surface condition level represents any of various conditions on the road surface such as dry, wet, snowy, and frozen, organized into levels. The road surface condition level represents respective conditions numerically. For example, the level 0 denotes dry, 1 denotes wet, 2 denotes snowy, and 3 denotes frozen. A value between integers represents a condition in between.

The arithmetic model 33a uses a learning type model such as a neural network. The arithmetic model 33a is of a convolutional neural network (CNN) type and uses a learning type model provided with convolution operation and pooling operation used in the so-called LeNet, which is a prototype of CNN. The arithmetic model 33a extracts a feature amount by subjecting data input to the input layer to convolution operation, pooling operation, etc. and transmits the feature amount to the nodes of the intermediate layer. The arithmetic model 33a fully connects the nodes of the intermediate layer to the nodes of the output layer by performing a linear operation, etc. In the full connection, a non-linear operation may be performed by using an activating function, etc., in addition to a linear operation. The tire force F in the three axial directions and the road surface condition level are output to the respective nodes of the output layer of the arithmetic model 33a.

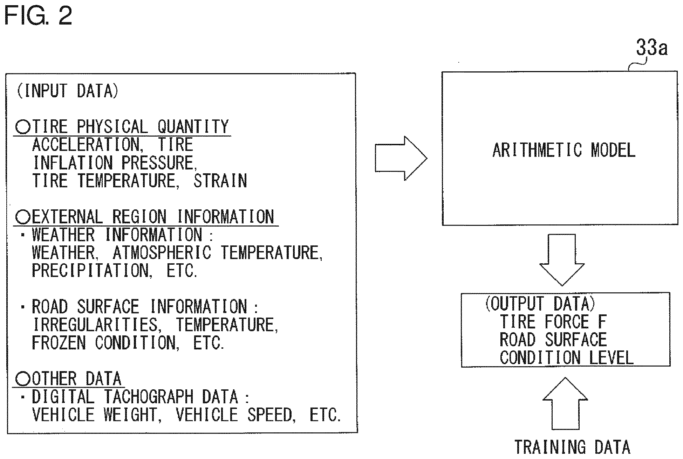

Fig. 2 is a schematic diagram for illustrating learning in the arithmetic model 33a. In addition to the tire physical quantity acquired by the sensor information acquisition unit 31, external region information, etc. can be used as the input data input to the arithmetic model 33a. Acceleration, tire inflation pressure, tire temperature, strain produced in the tire, etc. are used as the tire physical quantity. Weather information such as weather, atmospheric temperature, and precipitation and road surface information such as irregularities, temperature, and frozen condition on the road surface are used as the external region information. The vehicle weight, speed, etc. from the data of a digital tachograph mounted on the vehicle may also be used as the input data.

The arithmetic model 33a is trained to increase the precision thereof by comparing the tire force F and the road surface condition level resulting from the arithmetic operation with training data and repeatedly updating the arithmetic model 33a. It is assumed that the training data for the road surface condition level is known for various road surfaces used during training. The arithmetic model 33a may be trained by conducting rotation tests, changing the tire 10 and the road surface condition level of the contact surface that the tire 10 is placed in contact with. Further, the arithmetic model 33a may be trained by mounting the tire 10 on an actual vehicle and test driving the vehicle on road surfaces with different road surface condition levels.

In the arithmetic model 33a, the configuration (e.g., the number of layers) and weighting in the fully-connected part within the model change basically in accordance with the specification of the tire 10. The arithmetic model 33a can be trained in rotation tests n the tires 10 (including the wheel) of various specifications.

It should be noted, however, that it is not necessary to train the arithmetic model 33a strictly for each specification of the tire 10. For example, one arithmetic model 33a may be used in common for the tires 10 included in a plurality of specifications to reduce the number of arithmetic models, by training and building arithmetic models 33a for different types (e.g., tires for passenger vehicles, tires for trucks, etc.) so that the tire force F and the road surface condition level are estimated within a certain margin of error. Alternatively, the arithmetic model 33a can be trained by mounting the tire 10 on an actual vehicle and test driving the vehicle. The specification of the tire 10 includes information related to tire performance such as tire size, tire width, tire profile, tire strength, tire outer diameter, road index, and year/month/date of manufacturing.

The correction processing unit 33b corrects the arithmetic model 33a based on the condition of the tire 10. An alignment error is produced when the tire 10 is mounted to the vehicle. The physical property such as rubber hardness changes with time so that wear progresses as the vehicle is driven. The condition of the tire 10, including elements such as alignment error, physical property, and wear, changes depending on the situation of use, creating an error in the calculation of the tire force F and the road surface condition level by means of the arithmetic model 33a. The correction processing unit 33b performs a process of adding a correction term dependent on the condition of the tire 10 to the arithmetic model 33a in order to reduce the error in the arithmetic model 33a.

The correction processing unit 33b may correct the arithmetic model 33a by the weather information acquired by the external information acquisition unit 33d from an external apparatus. The road surface condition level calculated by the arithmetic model 33a depends on the weather information. The correction processing unit 33b weights the calculation in the arithmetic model 33a based on the weather information and makes a correction so that the road surface condition level close to the weather information is output. When the weather information indicates fair weather, for example, the operation in the arithmetic model 33a is weighted so that the road surface condition level output from the arithmetic model 33a has a value close to 0, which indicates "dry".

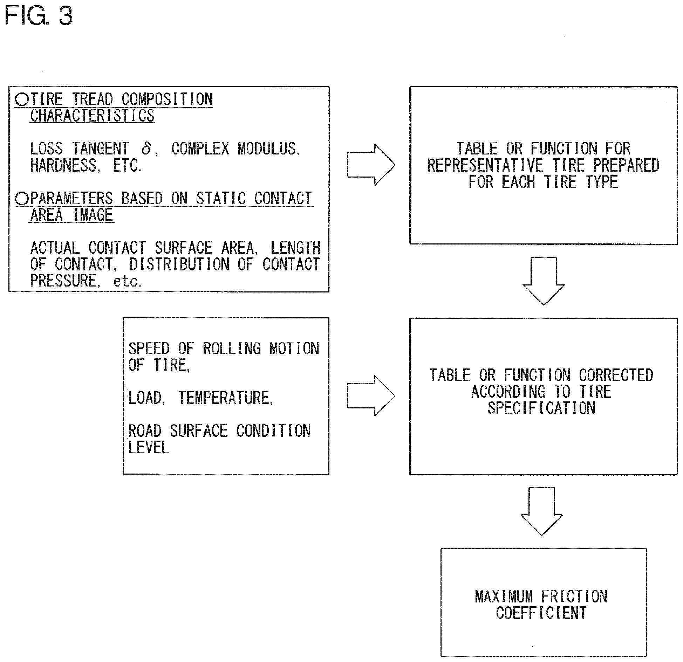

Fig. 3 is a schematic diagram for illustrating the calculation of the maximum friction coefficient by the maximum friction coefficient calculation unit 33c. The maximum friction coefficient calculation unit 33c reads the table or the function for calculating the maximum friction coefficient from the storage unit 32 and corrects the table or the function according to the specification of the tire 10. For correction, the tire tread composition characteristics of the tire 10 and the parameters obtained from a static contact area image of the tire are used. As described above, the table or the function stored in the storage unit 32 relates to a representative tire in each type of tires. The table of the function is corrected according to the specification of the individual tire 10 and is used accordingly.

The tire tread composition includes loss tangent tan δ, complex modulus, hardness, etc. These characteristics represent parameters for elastic deformation in the contact area or the portion of contact, which parameters are correlated to the maximum friction coefficient. Further, the parameters obtained from a static contact surface image showing contact between the tire 10 and the road surface include actual contact surface area, length of contact, distribution of contact pressure, etc., and these parameters are also correlated to the maximum friction coefficient. The maximum friction coefficient calculation unit 33c estimates the maximum friction coefficient of the individual tire 10 with high precision by correcting the table or the function for the representative tire with the tire tread composition characteristics based on the specification of the tire 10, the parameters obtained from a static contact surface image of the tire, etc.

The maximum friction coefficient calculation unit 33c corrects the table or the function for calculating the maximum friction coefficient according to the specification of the tire 10 and calculates the maximum friction coefficient by substituting the speed of rolling motion of the tire 10, the load Fz in the vertical direction of the tire force F, the temperature, and the road surface condition level into the table or the function. The load defined as the vertical component Fz of the tire force F and the road surface condition level are determined by the arithmetic model 33a, and the temperature of the tire 10 is measured by the sensor 20. Further, the speed of rolling motion of the tire 10 is calculated based on the traveling speed of the vehicle.

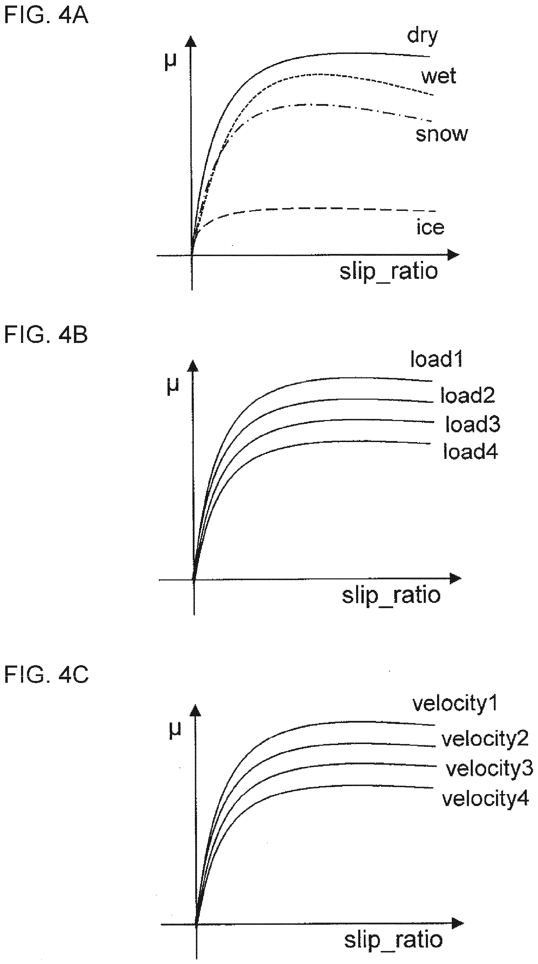

Figs. 4A, 4B and 4C are graphs showing an example of dependence of the friction coefficient on road surface condition, load, and speed. In Figs. 4A, 4B and 4C, the horizontal axis represents slip ratio, and the vertical axis represents friction coefficient. Fig. 4A shows the friction coefficient that results when the road surface is dry, wet, snowy, and frozen. Further, Fig. 4B shows the friction coefficient in the presence of different loads applied to the tire, and Fig. 4C shows the friction coefficient at different speeds of rolling motion of the tire. As shown in Figs. 4A, 4B and 4C, the friction coefficient between the tire 10 and the road surface varies depending on the road surface condition, load, and speed.

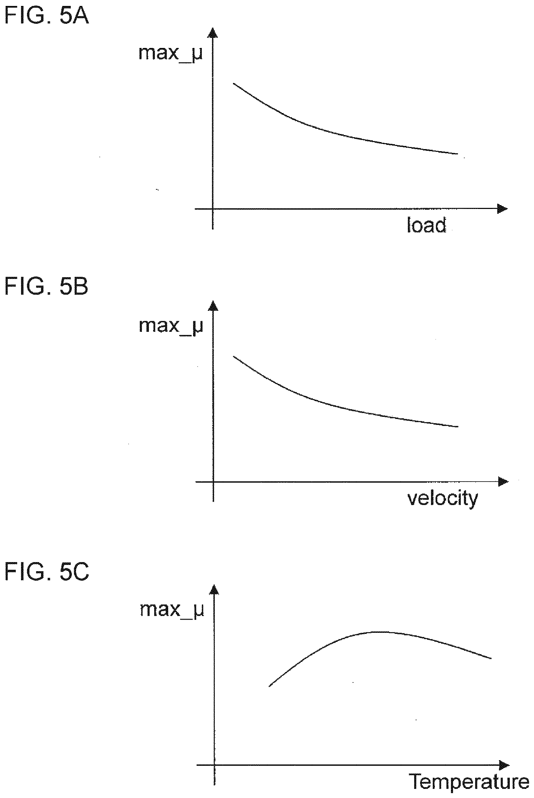

Figs. 5A, 5B and 5C are graphs showing an example of dependence of the maximum friction coefficient on load, speed, and temperature. In Figs. 5A, 5B and 5C, the horizontal axis represents load, speed, and temperature, respectively, and the vertical axis represents maximum friction coefficient. Fig. 5A shows that the larger the load on the tire, the lower the maximum friction coefficient, and Fig. 5B shows that the the maximum friction coefficient is lowered as the speed of rolling motion of the tire increases. Further, Fig. 5C shows that the maximum friction coefficient varies in accordance with the temperature of the tire. As shown in Figs. 5A, 5B and 5C, the maximum friction coefficient between the tire 10 and the road surface varies depending on the load, speed, and temperature of the tire.

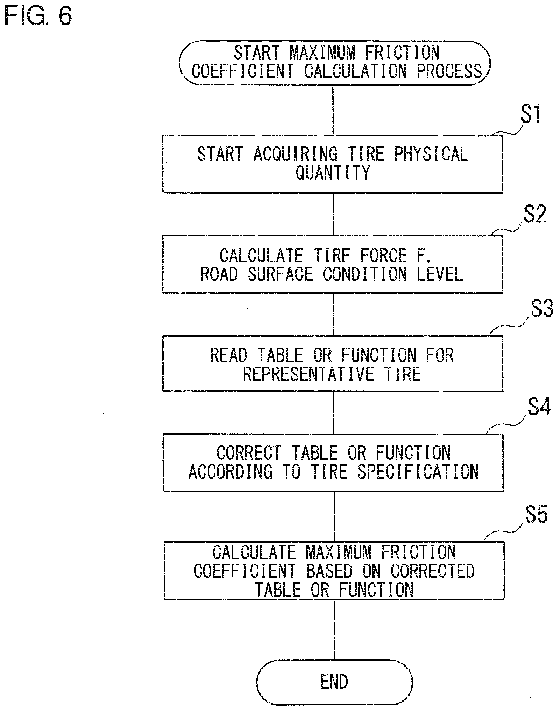

A description will be given of the operation of the maximum friction coefficient estimation system 100. Fig. 6 is a flowchart showing a sequence of steps of the maximum friction coefficient calculation process performed by the friction coefficient estimation apparatus 30. The sensor information acquisition unit 31 of the friction coefficient estimation apparatus 30 starts acquiring the tire physical quantity such as the acceleration in the tire 10, tire inflation pressure, tire temperature, etc. measured by the sensor 20 (S1).

The arithmetic processing unit 33 inputs the tire physical quantity to the arithmetic model 33a and calculates the tire force F and the road surface condition level (S2). In step S2, the arithmetic model 33a may be weighted with the weather information so that the road surface condition level is calculated through the operation that allows for the actual weather information.

The maximum friction coefficient calculation unit 33c reads the table or the function for calculating the maximum friction coefficient of the representative tire from the storage unit (S3). The maximum friction coefficient calculation unit 33c corrects the table or the function for calculating the maximum friction coefficient according to the specification of the tire 10 (S4). The maximum friction coefficient calculation unit 33c calculates the maximum friction coefficient based on the corrected table or function (S5) and terminates the process.

In the maximum friction coefficient estimation system 100, the table or the function for calculating the maximum friction coefficient for the representative tire is set for each type of tires. By correcting the table of the function according to the individual tire specification, the maximum friction coefficient between the tire 10 and the road surface can be estimated efficiently. By using the tire tread composition characteristics of the tire 10, the parameters obtained from a static contact area image of the tire, etc. to correct the table or the function for calculating the maximum friction coefficient, the table or the function for the individual tire suited to the specification of the tire 10 can be built.

The maximum friction coefficient estimation system 100 substitutes the speed of rolling motion, load, temperature of the tire, and the road surface condition level into the table or the function for calculating the maximum friction coefficient and calculates the maximum friction coefficient accordingly. The speed of rolling motion, load, temperature of the tire, and road surface condition level can be acquired by direct measurement by the sensor 20 or indirect calculation.

The maximum friction coefficient estimation system 100 can calculate the load Fz in the vertical direction of the tire 10 and the road surface condition level with high precision by using the learning-type arithmetic model 33a that receives an input of the tire physical quantity measured by the sensor 20 provided in the tire 10. The arithmetic model 33a outputs the road surface condition level in which the actual weather is reflected by weighting and correcting the calculation of the road surface condition level based on the weather information. When the arithmetic model 33a is formed by a neural network that uses a CNN, for example, the feature amount extracted by convolution operation, etc. and the connected operation from the intermediate layer to the output layer can be corrected by weighting based on the weather information.

A description will now be given of the features of the maximum friction coefficient estimation system 100 and the maximum friction coefficient estimation method according to the embodiment. The maximum friction coefficient estimation system 100 according to the embodiment is provided with the storage unit 32 and the maximum friction coefficient calculation unit 33c. The storage unit 32 stores a table or a function for calculating the maximum friction coefficient between the tire 10 and the road surface for a representative tire, based on the speed of rolling motion, load, temperature of the tire 10, and road surface condition level. The maximum friction coefficient calculation unit 33c corrects the table or the function according to the individual tire specification and calculates the maximum friction coefficient accordingly. In this way, the maximum friction coefficient estimation system 100 can estimate the maximum friction coefficient between the tire 10 and the road surface efficiently by correcting the table of the function according to the individual tire specification.

The maximum friction coefficient calculation unit 33c corrects the table or the function based on the tire tread composition characteristics in the tire specification. Further, the maximum friction coefficient calculation unit 33c corrects the table or the function based on the parameters obtained from a contact area image of the tire. This allows the maximum friction coefficient estimation system to build the table or the function for the individual tire suited to the specification of the tire 10.

The system further includes the sensor information acquisition unit 31 that acquires the physical quantity of the tire 10 measured by the sensor 20 provided in the tire 10, and the arithmetic model 33a that receives an input of the physical quantity of the tire 10 acquired by the sensor information acquisition unit 31 and estimates the load and the road surface condition level. This allows the maximum friction coefficient estimation system 100 to calculate the load Fz in the vertical direction of the tire 10 and the road surface condition level with high precision by using the arithmetic model 33a that receives an input of the tire physical quantity measured by the sensor 20 provided in the tire 10.

The arithmetic model 33a we weighted with the weather information and calculates the road surface condition level accordingly. This allows the maximum friction coefficient estimation system 100 to output the road surface condition level in which the actual weather is reflected by correcting the operation to determine the road surface condition level with a weight based on the actual weather information.

The maximum friction coefficient estimation method includes a reading step and a maximum friction coefficient calculation step. The reading step reads the table or the function for calculating the maximum friction coefficient between the tire 10 and the road surface for the representative tire, based on the speed of rolling motion, load, temperature of the tire 10, and the road surface condition level. The maximum friction coefficient calculation step corrects the table or the function according to the individual tire specification and calculates the maximum friction coefficient accordingly. According to this maximum friction coefficient estimation method, the maximum friction coefficient between the tire 10 and the road surface can be estimated efficiently by correcting the table or the function according to the individual tire specification.

Described above is an explanation based on an exemplary embodiment. The embodiments are intended to be illustrative only and it will be understood to those skilled in the art that variations and modifications are possible within the claim scope of the present invention and that such variations and modifications are also within the claim scope of the present invention. Therefore, the description in this specification and the drawings shall be treated to serve illustrative purposes and shall not limit the scope of the invention.

### [INDUSTRIAL APPLICABILITY]

The present invention relates to a maximum friction coefficient estimation system and a maximum friction coefficient estimation method for estimating a maximum friction coefficient between a tire and a road surface.

### [REFERENCE SIGNS LIST]

10 tire, 20 sensor, 31 sensor information acquisition unit, 32 storage unit, 33a arithmetic model, 33c maximum friction coefficient calculation unit, 100 maximum friction coefficient estimation system

## Claims

1. A maximum friction coefficient estimation system comprising:
a storage unit that stores a table or a function for calculating a maximum friction coefficient between a tire and a road surface for a representative tire, based on a speed of rolling motion, load, temperature of the tire and a road surface condition level; and
a maximum friction coefficient calculation unit that corrects the table or the function according to an individual tire specification and calculates the maximum friction coefficient accordingly.

2. The maximum friction coefficient estimation system according to claim 1, wherein
the maximum friction coefficient calculation unit corrects the table or the function based on tire tread composition characteristics in the tire specification.

3. The maximum friction coefficient estimation system according to claim 1, wherein
the maximum friction coefficient calculation unit corrects the table or the function based on parameters obtained from a contact area image of the tire.

4. The maximum friction coefficient estimation system according to any one of claims 1 through 3, further comprising:
a sensor information acquisition unit that acquires a physical quantity of the tire measured by a sensor provided in the tire; and
an arithmetic model that receives an input of the physical quantity of the tire acquired by the sensor information acquisition unit to estimate the load and the road surface condition level.

5. The maximum friction coefficient estimation system according to claim 4, wherein
the arithmetic model calculates the road surface condition level by weighting the road surface condition level with weather information.

6. A maximum friction coefficient estimation method comprising:
reading a table or a function for calculating a maximum friction coefficient between a tire and a road surface for a representative tire, based on a speed of rolling motion, load, temperature of the tire and a road surface condition level; and
correcting the table or the function according to an individual tire specification and calculating the maximum friction coefficient accordingly.
